# EUROPÄISCHE PATENTSCHRIFT

(11) **EP 4 028 293 B1**
(45) Veröffentlichungstag und Bekanntmachung des Hinweises auf die Patenterteilung: **26.02.2025**
(21) Anmeldenummer: 20761548.5
(22) Anmeldetag: 21.08.2020
(51) Int. Cl.: B60S 1/56, B60S 1/48

(54) **KRAFTFAHRZEUG UND VERFAHREN ZUM REINIGEN VON SENSOREN EINES FAHRZEUGS**
VEHICLE AND METHOD FOR CLEANING SENSORS OF A VEHICLE
VÉHICULE ET PROCÉDÉ DE NETTOYAGE DES CAPTEURS D'UN VÉHICULE

(30) Priorität: 09.09.2019 DE 102019124099
(43) Veröffentlichungstag der Anmeldung: 20.07.2022
(73) Patentinhaber: Bayerische Motoren Werke Aktiengesellschaft, 80809 München (DE)
(72) Erfinder: ZELLERHOFF, Mark, 80999 München (DE); PINSEL, Mathias, 85540 Haar (DE); LOUIS, Lawrence, 81541 München (DE); PAROLINI, Luca, 84032 Landshut (DE)
(86) Internationale Anmeldenummer: PCT/EP2020/073511
(87) Internationale Veröffentlichungsnummer: WO 2021/047892

(56) Entgegenhaltungen:
- WO-A1-2019/073975
- WO-A1-2020/030860
- JP-A- 2019 104 364
- JP-A- 2019 104 365
- US-B1- 10 173 646

## Beschreibung

Die vorliegende Offenbarung betrifft ein Fahrzeug mit einem System zum Reinigen von Sensoren eines Fahrzeugs und ein Verfahren zum Reinigen von Sensoren dieses Fahrzeugs. Die vorliegende Offenbarung betrifft insbesondere eine effiziente Entfernung einer Verschmutzung von Sensoren, wie zum Beispiel in einem Sichtfeld einer Kamera, die beispielsweise beim automatisierten, und insbesondere autonomen Fahren verwendet werden.

### Stand der Technik

Moderne Fahrzeuge umfassen eine Vielzahl von verschiedenen Sensorsystemen, wie zum Beispiel ein LiDAR-System, ein Radar-System, eine Kamera und ein Ultraschall-System. Derartige Sensorsysteme können für eine Vielzahl verschiedener Anwendungen eingesetzt werden, wie zum Beispiel für Fahrassistenzsysteme zum automatisierten Fahren. Beim automatisierten Fahren kann es sich um ein zeitlich längeres Fahren beispielsweise auf der Autobahn oder um ein zeitlich begrenztes Fahren im Rahmen des Einparkens oder Rangierens handeln. Ein solches Fahrassistenzsystem verwendet Daten der Sensorsysteme, um das Fahrzeug zu steuern. Hier ist es unerlässlich, dass ein Umfeld des Fahrzeugs eindeutig und so genau wie möglich bestimmt wird.

In Abhängigkeit der Wetterbedingungen kann es zu einer Verschmutzung der Sensoren und damit zu einer Beeinträchtigung eines Erfassungsbereiches bzw. Sichtfeldes der Sensoren kommen. Um eine zuverlässige Umfelderfassung durch die Sensoren zu gewährleisten, ist es vorteilhaft, die Verschmutzung im Erfassungsbereich bzw. Sichtfeld der Sensoren effizient zu entfernen.

US 10 173 646 B1 beschreibt ein Sensorreinigungssystem zum Reinigen eines oder mehrerer Sensoren an einem autonomen Fahrzeug. Dabei erhält ein Computersystem Daten, die einen Sensorzustand des autonomen Fahrzeugs angeben und bestimmt basierend auf den Daten eine Sensorreinigungssequenz für eine oder mehrere Sensorreinigungseinheiten des autonomen Fahrzeugs. Die Sensorreinigungseinheiten sind eingerichtet, jeweils eine oder mehrere Sensoren des autonomen Fahrzeugs zu reinigen und werden durch das Computersystem angesteuert, die Sensorreinigungseinheiten basierend auf der Sensorreinigungssequenz zu reinigen.

WO 2019/073975 A1 beschreibt ein Fahrzeugreinigungssystem, mit einer Vielzahl von Reinigungssektionen, die konfiguriert sind, um Reinigungsziele umfassend Sensorflächen von an einem Fahrzeug installierten optischen Sensoren zu reinigen, und einer Steuerungssektion, die dazu fähig ist, die Reinigungssektionen automatisch zu steuern. Die Steuerungssektion ist konfiguriert, um in Fällen, in denen eine Reinigungsanforderung für die Reinigungssektionen erfolgt ist, die Reinigungssektionen der Reihe nach gemäß einer Prioritätsrangfolge als Reaktion auf eine Fahrsituation und/oder eine Umgebungssituation des Fahrzeugs zu aktivieren.

### Offenbarung der Erfindung

Es ist eine Aufgabe der vorliegenden Offenbarung, ein Fahrzeug mit einem System zum Reinigen von Sensoren eines Fahrzeugs und ein Verfahren zum Reinigen von Sensoren dieses Fahrzeugs anzugeben, die eine Umfelderfassung durch die Sensoren gewährleisten können. Insbesondere ist es eine Aufgabe der vorliegenden Offenbarung, eine Fahrassistenzfunktion zum automatisierten, und insbesondere autonomen Fahren sicherer zu gestalten.

Diese Aufgabe wird durch den Gegenstand der unabhängigen Ansprüche gelöst. Vorteilhafte Ausgestaltungen sind in den Unteransprüchen angegeben.

Gemäß einem unabhängigen Aspekt der vorliegenden Offenbarung ist ein Fahrzeug mit einem System zum Reinigen von Sensoren eines Fahrzeugs, insbesondere eines Kraftfahrzeugs, angegeben. Das Fahrzeug umfasst wenigstens eine Reinigungsvorrichtung, die eingerichtet ist, um eine Vielzahl von Sensoren eines Fahrzeugs zu reinigen; ein Fahrassistenzsystem für ein automatisiertes Fahren, welches eingerichtet ist, eine Fahrstrategie zu bestimmen und ein selbständiges Lenken und/oder Bremsen und/oder Beschleunigen des Fahrzeugs basierend auf der Fahrstrategie zu bewirken, wobei das Fahrassistenzsystem wenigstens einige der Vielzahl von Sensoren verwendet; und eine Steuervorrichtung, die eingerichtet ist, um die wenigstens eine Reinigungsvorrichtung zu steuern. Die Steuervorrichtung ist weiter eingerichtet, um basierend auf wenigstens einem Situationsparameter mehrere Sensoren aus der Vielzahl von Sensoren auszuwählen, die gereinigt werden sollen, und um zu bestimmen, in welcher Reihenfolge bzw. mit welcher Priorisierung die ausgewählten mehreren Sensoren gereinigt werden sollen. Die Priorisierung kann dabei zumindest teilweise auf demselben wenigstens einen Situationsparameter wie die Auswahl, wenigstens einem anderen Situationsparameter wie die Auswahl, oder auf eine andere Weise wie die Auswahl erfolgen.

Basierend auf dem wenigstens einen Situationsparameter werden zuerst mehrere Sensoren ausgewählt, die anschließend priorisiert werden. Damit kann eine Anzahl der zu reinigenden Sensoren minimiert werden, wodurch Ressourcen und Zeit bei der Reinigung gespart werden können. Beispielsweise können Sensoren, die in der aktuellen oder einer bevorstehenden Situation nicht gebraucht werden, nicht unnötigerweise gereinigt werden. Zudem können die Ressourcen aufgrund der Priorisierung der Sensoren effizient eingesetzt werden, wodurch zum Beispiel eine Sicherheit einer automatisierten Fahrfunktion verbessert werden kann.

Der Begriff "Situationsparameter" bezieht sich im Rahmen der vorliegenden Offenbarung auf einen Umstand, wie er in einer aktuellen oder bevorstehenden Situation des Fahrzeugs vorkommt und/oder relevant ist. Damit kann die Reinigung der Sensoren situationsabhängig erfolgen. Insbesondere kann die Reinigungsprozedur dynamisch und flexibel angepasst werden, so dass eine effiziente und ressourcenschonende Reinigung der Sensoren des Fahrzeugs erfolgen kann.

Vorzugsweise ist die Steuervorrichtung weiter eingerichtet, um die Auswahl der mehreren Sensoren aus der Vielzahl von Sensoren und die Reihenfolge der Reinigung der ausgewählten mehreren Sensoren während eines Betriebs des Fahrzeugs dynamisch zu aktualisieren. Anders gesagt wird die Auswahl und die Reihenfolge der zu reinigenden Sensoren laufend angepasst. Hierdurch kann flexibel auf Umstandsänderungen reagiert werden, so dass in jeder Situation eine optimale und ressourcensparende Reinigung der Sensoren erfolgt.

Die Steuervorrichtung ist nach der Erfindung eingerichtet, um die Auswahl der mehreren Sensoren aus der Vielzahl von Sensoren und die Bestimmung der Reihenfolge der Reinigung der ausgewählten mehreren Sensoren basierend auf der bestimmten Fahrstrategie durchzuführen.

Ein automatisiert fahrendes Fahrzeug lenkt und/oder bremst und/oder beschleunigt selbstständig basierend auf einer Fahrstrategie. Die Fahrstrategie kann basierend auf Umfelddaten der Umfeldsensorik, Straßenzustand, Verkehrslage, Wetterlage, etc. bestimmt werden. Die Umsetzung der bestimmten Fahrstrategie erfolgt durch den Antrieb, die Lenkung und/oder die Bremsen. Durch das Reinigen der Sensoren basierend auf der Fahrstrategie kann sichergestellt werden, dass die für die Umsetzung der bestimmten Fahrstrategie benötigten Sensoren präzise und korrekte Daten liefern. Damit kann die Fahrstrategie zuverlässig umgesetzt und eine Sicherheit verbessert werden.

Nach der Erfindung ist die Steuervorrichtung eingerichtet, um die Bestimmung der Reihenfolge der Reinigung der ausgewählten mehreren Sensoren basierend auf Prioritäten der mehreren Sensoren für die Fahrstrategie durchzuführen. Der Begriff "Priorität" bezieht sich im Rahmen der vorliegenden Offenbarung auf eine Wichtigkeit der Sensoren beispielsweise bezüglich einer nötigen Reinigung und/oder einer Funktion des Fahrzeugs, wie einer automatisierten Fahrfunktion. Beispielsweise können stark verschmutze Sensoren eine höhere Priorität haben und somit vor weniger verschmutzten Sensoren gereinigt werden. Ergänzend oder alternativ können für eine Funktion des Fahrzeugs wichtige Sensoren vor oder anstatt weniger wichtigen Sensoren gereinigt werden.

Vorzugsweise ist der wenigstens eine Situationsparameter aus der Gruppe ausgewählt, die einen Fahrzustand, einen Fahrzeugzustand, einen Verschmutzungsgrad der Vielzahl von Sensoren (z.B. eine Bedeckung einer Sensoroberfläche durch Fremdmaterial) und eine Umgebungssituation des Fahrzeugs umfasst, oder die daraus besteht. Die vorliegende Offenbarung ist jedoch nicht hierauf begrenzt und der wenigstens eine Situationsparameter kann jeden Parameter umfassen, der geeignet ist, um eine Situation des Fahrzeugs bezüglich der Reinigung der Sensoren geeignet zu beschreiben.

Vorzugsweise ist der Fahrzustand aus der Gruppe ausgewählt, die eine Position des Fahrzeugs (z.B. in Echtzeit und/oder auf der Straße, beispielsweise auf welcher Spur fährt das Fahrzeug), eine Geschwindigkeit des Fahrzeugs, eine Verkehrssituation (z.B. Verkehrsdichte) und eine Fahrtroute umfasst, oder die daraus besteht.

Vorzugsweise ist der Fahrzeugzustand aus der Gruppe ausgewählt, die einen Reinigungsmittelvorrat, eine Verfügbarkeit der wenigstens einen Reinigungsvorrichtung und einen Energieverbrauch des Fahrzeugs umfasst, oder die daraus besteht. Die Verfügbarkeit der wenigstens einen Reinigungsvorrichtung kann zum Beispiel eingeschränkt sein, falls eine Reinigungsvorrichtung defekt ist oder kein Reinigungsmittel zur Verfügung steht. Durch die Berücksichtigung des Energieverbrauch des Fahrzeugs kann ein für die Reinigung benötigter Energieverbrauch angepasst werden, zum Beispiel um bei hohem Energieverbrauch für eine Klimatisierung Energie bei der Reinigung zu sparen.

Vorzugsweise ist die Umgebungssituation des Fahrzeugs aus der Gruppe ausgewählt, die eine Wetterbedingung und eine Außentemperatur umfasst, oder die daraus besteht. Die Wetterbedingung kann eine Wetterlage sein, wie zum Beispiel Sonne, Regen, Schnee, Eis, Nebel, Wind etc. Die Wetterdingung kann zum Beispiel eine Wetterdingung auf der Route sein, wie zum Beispiel ein Regen in 2km. Hierdurch können die Sensoren proaktiv gereinigt werden, so dass bei einer Änderung der Wetterbedingungen bereits optimal funktionierende Sensoren bereitgestellt sind. Das Fahrzeug umfasst das System zum Reinigen von Sensoren und die Vielzahl von Sensoren gemäß den Ausführungsformen der vorliegenden Offenbarung.

Der Begriff Fahrzeug umfasst PKW, LKW, Busse, Wohnmobile, Krafträder, etc., die der Beförderung von Personen, Gütern, etc. dienen. Insbesondere umfasst der Begriff Kraftfahrzeuge zur Personenbeförderung.

Vorzugsweise ist die Vielzahl von Sensoren aus der Gruppe ausgewählt, die einen LiDAR-Sensor, einen Radar-Sensor, eine Kamera und einen Ultraschall-Sensor umfasst, oder die daraus besteht. Die Vielzahl von Sensoren kann auch als "Umgebungssensorik" bezeichnet werden. Die Umgebungssensorik kann Umfelddaten (auch als "Umgebungsdaten" bezeichnet) bereitstellen, die einen Umgebungsbereich des Fahrzeugs abbilden und beispielsweise in einem Fahrassistenzsystem zur Steuerung des Fahrzeugs verwendet werden.

Unter dem Begriff "automatisiertes Fahren" kann im Rahmen des Dokuments ein Fahren mit automatisierter Längs- oder Querführung oder ein autonomes Fahren mit automatisierter Längs- und Querführung verstanden werden. Bei dem automatisierten Fahren kann es sich beispielsweise um ein zeitlich längeres Fahren auf der Autobahn oder um ein zeitlich begrenztes Fahren im Rahmen des Einparkens oder Rangierens handeln. Der Begriff "automatisiertes Fahren" umfasst ein automatisiertes Fahren mit einem beliebigen Automatisierungsgrad. Beispielhafte Automatisierungsgrade sind ein assistiertes, teilautomatisiertes, hochautomatisiertes, vollautomatisiertes und autonomes Fahren. Die ersten vier dieser Automatisierungsgrade wurden von der Bundesanstalt für Straßenwesen (BASt) definiert (siehe BASt-Publikation "Forschung kompakt", Ausgabe 11/2012).

Beim assistierten Fahren führt der Fahrer dauerhaft die Längs- oder Querführung aus, während das System die jeweils andere Funktion in gewissen Grenzen übernimmt. Beim teilautomatisierten Fahren (TAF) übernimmt das System die Längs- und Querführung für einen gewissen Zeitraum und/oder in spezifischen Situationen, wobei der Fahrer das System wie beim assistierten Fahren dauerhaft überwachen muss. Beim hochautomatisierten Fahren (HAF) übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich.

Die vorstehend genannten vier Automatisierungsgrade entsprechen den SAE-Level 1 bis 4 der Norm SAE J3016 (SAE - Society of Automotive Engineering). Beispielsweise entspricht das hochautomatisierte Fahren (HAF) Level 3 der Norm SAE J3016. Ferner ist in der SAE J3016 noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann; ein Fahrer ist generell nicht mehr erforderlich. Die Ausführungsformen der vorliegenden Offenbarung können für alle Automatisierungsgrade, und insbesondere die oben genannten Automatisierungsgrade SAE-Level 1 bis 5, verwendet werden.

Gemäß einem weiteren unabhängigen Aspekt der vorliegenden Offenbarung ist ein Verfahren zum Reinigen von Sensoren eines Fahrzeugs angegeben. Das Verfahren umfasst ein Bestimmen einer Fahrstrategie für ein automatisiertes Fahren des Fahrzeugs, wobei das Fahrzeug basierend auf der bestimmten Fahrstrategie selbständig lenken und/oder bremsen und/oder beschleunigen soll; ein Auswählen einer Vielzahl von Sensoren, die gereinigt werden sollen, basierend auf wenigstens einem Situationsparameter; ein Bestimmen, in welcher Reihenfolge die ausgewählten mehreren Sensoren gereinigt werden sollen (z.B. basierend auf dem wenigstens einen Situationsparameter); und ein Reinigen der mehreren Sensoren in der zuvor bestimmten Reihenfolge. Dabei wird die Auswahl der mehreren Sensoren aus der Vielzahl von Sensoren und die Bestimmung der Reihenfolge der Reinigung der ausgewählten mehreren Sensoren basierend auf Prioritäten der mehreren Sensoren für die bestimmte Fahrstrategie durchgeführt.

Das Verfahren kann die Aspekte des in diesem Dokument beschriebenen Systems implementieren.

Gemäß einem weiteren unabhängigen Aspekt ist ein Speichermedium angegeben. Das Speichermedium kann ein SW Programm umfassen, welches eingerichtet ist, um auf einem oder mehreren Prozessoren ausgeführt zu werden, und um dadurch das in diesem Dokument beschriebene Verfahren auszuführen.

### Kurze Beschreibung der Zeichnungen

Ausführungsbeispiele der Offenbarung sind in den Figuren dargestellt und werden im Folgenden näher beschrieben. Es zeigen:
Figur 1 schematisch ein System zum Reinigen von Sensoren eines Fahrzeugs gemäß Ausführungsformen der vorliegenden Offenbarung,
Figur 2 schematisch ein Fahrzeug mit einem Fahrassistenzsystem gemäß Ausführungsformen der vorliegenden Offenbarung, und
Figur 3 schematisch ein Flussdiagramm eines Verfahrens zum Reinigen von Sensoren eines Fahrzeugs gemäß Ausführungsformen der vorliegenden Offenbarung.

### Ausführungsformen der Offenbarung

Im Folgenden werden, sofern nicht anders vermerkt, für gleiche und gleichwirkende Elemente gleiche Bezugszeichen verwendet.

Im Allgemeinen erfordert ein automatisiertes Fahren den Einsatz mehrerer redundanter Sensorsysteme. Eine der größten Herausforderungen besteht darin, bei einer Vielzahl von Straßenverhältnissen eine möglichst klare Sicht zu gewährleisten, auch wenn es Bedingungen gibt, die eine Verschmutzung beispielsweise der Kameraobjektive verursachen würden. Da die Wahrscheinlichkeit einer funktionellen Verschlechterung durch Schmutz, Schnee, Eis etc. stark von der Sensorposition und der Aerodynamik abhängt, benötigen die meisten Sensoren ein Reinigungssystem, um eine hohe Verfügbarkeit zu ermöglichen.

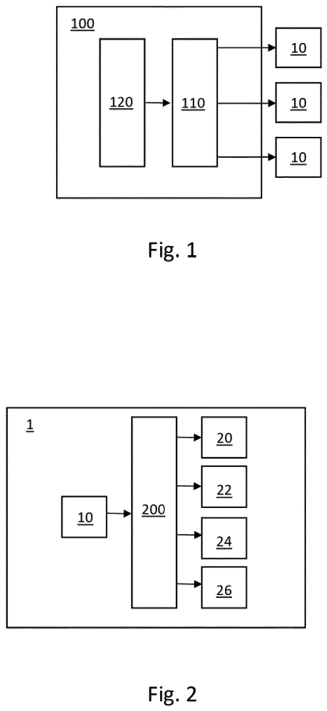

Figur 1 zeigt schematisch ein System 100 zum Reinigen von Sensoren eines Fahrzeugs gemäß Ausführungsformen der vorliegenden Offenbarung.

Das System 100 umfasst wenigstens eine Reinigungsvorrichtung 110, die eingerichtet ist, um eine Vielzahl von Sensoren 10 eines Fahrzeugs zu reinigen; und eine Steuervorrichtung 120, die eingerichtet ist, um die wenigstens eine Reinigungsvorrichtung 110 zu steuern. Die Steuervorrichtung 120 ist weiter eingerichtet, um basierend auf wenigstens einem Situationsparameter mehrere Sensoren aus der Vielzahl von Sensoren 10 auszuwählen, die gereinigt werden sollen, und um zu bestimmen, in welcher Reihenfolge bzw. mit welcher Priorisierung die ausgewählten mehreren Sensoren gereinigt werden sollen.

Damit kann die Reinigung der Sensoren situationsabhängig erfolgen. Insbesondere kann der Reinigungsprozedur flexibel angepasst werden, so dass eine effiziente und ressourcenschonende Reinigung der Sensoren erfolgen kann. Abhängig von einer aktuellen Fahrsituation könnte ein autonomes Fahrzeug beispielsweise auf einen redundanten Sensor verzichten. Dies ermöglicht dem System, die Oberfläche des Sensors zu reinigen, um die Verfügbarkeit für spätere Szenarien wiederherzustellen, in denen dieser Sensor entscheidend sein könnte. Um unterschiedlichen Fahrsituationen Rechnung zu tragen, wird eine Priorität wichtiger Sensoren und optional deren Reinigungszeitpunkt festgelegt. Diese Priorität der Reinigung kann sich während der Fahrt ändern.

In einigen Ausführungsformen kann eine Reinigungsvorrichtung 110 einem einzigen Sensor zugeordnet sein bzw. einen einzigen Sensor reinigen. Weiter kann eine Reinigungsvorrichtung 110 zwei oder mehr Sensoren zugeordnet sein bzw. zwei oder mehr Sensoren reinigen. Die Zuordnung zwischen der wenigstens einen Reinigungsvorrichtung 110 und der Vielzahl von Sensoren 10 ist jedoch nicht hierauf beschränkt und kann auf jede geeignete Weise vorgesehen sein.

Die wenigstens eine Reinigungsvorrichtung 110 kann in einigen Ausführungsformen eingerichtet sein, um einen oder mehrere entsprechende Sensoren mittels Luft, Gas und/oder Reinigungsmittel (z.B. Wasser, dem optional ein Reinigungsmittel und/oder ein Frostschutz zugegeben ist) zu reinigen. Die wenigstens eine Reinigungsvorrichtung 110 kann zum Beispiel eine Düse umfassen, die auf einen entsprechenden Sensor gerichtet ist.

Vorzugsweise ist die Steuervorrichtung 120 weiter eingerichtet, um die Auswahl der mehreren Sensoren aus der Vielzahl von Sensoren 10 und die Reihenfolge der Reinigung der ausgewählten mehreren Sensoren während eines Betriebs des Fahrzeugs dynamisch zu aktualisieren. Anders gesagt werden die Auswahl und die Reihenfolge der zu reinigenden Sensoren laufend angepasst. Hierdurch kann flexibel auf Umstandsänderungen reagiert werden, so dass in jeder Situation eine optimale und ressourcensparende Reinigung der Sensoren 10 erfolgt.

Die Steuervorrichtung 120 ist eingerichtet um die Auswahl der mehreren Sensoren aus der Vielzahl von Sensoren 10 und die Bestimmung der Reihenfolge der Reinigung der ausgewählten mehreren Sensoren basierend auf einer Fahrstrategie durchzuführen. Durch das Reinigen der Sensoren basierend auf der Fahrstrategie kann sichergestellt werden, dass die für die Umsetzung der bestimmten Fahrstrategie benötigten Sensoren präzise und korrekte Daten liefern. Damit kann die Fahrstrategie zuverlässig umgesetzt und eine Sicherheit verbessert werden.

Nach der Erfindung ist die Steuervorrichtung 120 eingerichtet, um die Bestimmung der Reihenfolge der Reinigung der ausgewählten mehreren Sensoren basierend auf Prioritäten der mehreren Sensoren z.B. für die Fahrstrategie durchzuführen. Der Begriff "Priorität" bezieht sich dabei auf eine Wichtigkeit oder einen Beitrag der Sensoren beispielsweise bezüglich einer Funktion des Fahrzeugs, wie einer automatisierten Fahrfunktion. Beispielsweise können für eine Funktion des Fahrzeugs wichtige Sensoren bzw. Sensoren, die einen großen Beitrag zum Funktionieren der Funktion liefern, zuerst bzw. mit höherer Priorität gereinigt werden.

Typischerweise ist wenigsten eine Situationsparameter aus der Gruppe ausgewählt, die einen Fahrzustand, einen Fahrzeugzustand, einen Verschmutzungsgrad der Vielzahl von Sensoren, eine Umgebungssituation des Fahrzeugs und Kombinationen davon umfasst, oder die daraus besteht.

Der Fahrzustand kann aus der Gruppe ausgewählt sein, die eine Position des Fahrzeugs, eine Geschwindigkeit des Fahrzeugs, eine Verkehrssituation und eine Fahrtroute umfasst, oder die daraus besteht.

Der Fahrzeugzustand kann aus der Gruppe ausgewählt sein, die einen Reinigungsmittelvorrat, eine Verfügbarkeit der wenigstens einen Reinigungsvorrichtung und einen Energieverbrauch des Fahrzeugs umfasst, oder die daraus besteht. Die Verfügbarkeit der wenigstens einen Reinigungsvorrichtung kann zum Beispiel eingeschränkt sein, falls eine Reinigungsvorrichtung defekt ist oder kein Reinigungsmittel zur Verfügung steht. Durch die Berücksichtigung des Energieverbrauchs des Fahrzeugs kann ein für die Reinigung benötigter Energieverbrauch angepasst werden, zum Beispiel, um bei hohem Energieverbrauch für eine Klimatisierung Energie bei der Reinigung zu sparen.

Die Umgebungssituation des Fahrzeugs kann aus der Gruppe ausgewählt sein, die eine Wetterbedingung und eine Außentemperatur umfasst, oder die daraus besteht. Die Wetterbedingung kann eine Wetterlage sein, wie zum Beispiel Wind, Sonne, Regen, Schnee, Eis, Nebel, etc.

Figur 2 zeigt schematisch ein Fahrzeug 1 mit einem Fahrassistenzsystem 200 zum automatisierten Fahren gemäß Ausführungsformen der vorliegenden Offenbarung. Das Fahrzeug 1 kann insbesondere ein Kraftfahrzeug sein.

Das Fahrzeug 1 umfasst das Fahrassistenzsystem 200 und das System zum Reinigen von Sensoren. Das Fahrassistenzsystem 200 ist für ein automatisiertes Fahren eingerichtet. Beim automatisierten Fahren erfolgt die Längs- und Querführung des Fahrzeugs 1 automatisch. Das Fahrassistenzsystem 200 übernimmt also die Fahrzeugführung. Hierzu steuert das Fahrassistenzsystem 200 den Antrieb 20, das Getriebe 22, die hydraulische Betriebsbremse 24 und die Lenkung 26 über nicht dargestellte Zwischeneinheiten.

Zur Planung und Durchführung des automatisierten Fahrens werden Umfeldinformationen einer Umfeldsensorik, die das Fahrzeugumfeld beobachtet, vom Fahrerassistenzsystem 200 entgegengenommen. Insbesondere kann das Fahrzeug 1 die Vielzahl von Sensoren 10 gemäß den Ausführungsformen der vorliegenden Offenbarung umfassen, die zur Aufnahme von Umgebungsdaten, die das Fahrzeugumfeld angeben, eingerichtet ist. Die Vielzahl von Sensoren 10 kann beispielsweise ein Lidar-System, ein Radar-System und/oder eine Kamera umfassen. Die Sensoren 10 werden durch das System der vorliegenden Offenbarung dynamisch priorisiert und entsprechen gereinigt.

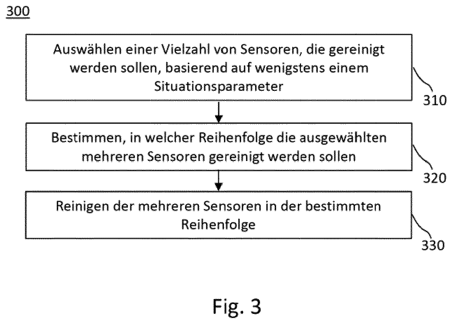

Figur 3 zeigt schematisch ein Flussdiagramm eines Verfahrens 300 zum Reinigen von Sensoren eines Fahrzeugs gemäß Ausführungsformen der vorliegenden Offenbarung. Das Verfahren 300 kann durch eine entsprechende Software implementiert werden, der durch einen Prozessor (z.B. eine CPU) ausführbar ist.

Das Verfahren 300 umfasst im Block 310 ein Auswählen einer Vielzahl von Sensoren, die gereinigt werden sollen, basierend auf wenigstens einem Situationsparameter; im Block 320 ein Bestimmen, in welcher Reihenfolge die ausgewählten mehreren Sensoren gereinigt werden sollen (z.B. basierend auf dem wenigstens einen Situationsparameter); und im Block 330 ein Reinigen der mehreren Sensoren in der bestimmten Reihenfolge.

Das Verfahren 300 kann die Aspekte des in diesem Dokument beschriebenen Systems zum Reinigen von Sensoren eines Fahrzeugs implementieren.

Basierend auf dem wenigstens einen Situationsparameter werden mehrere Sensoren ausgewählt und priorisiert. Damit kann eine Anzahl der zu reinigenden Sensoren minimiert werden, wodurch Ressourcen und Zeit bei der Reinigung gespart werden können. Beispielsweise können Sensoren, die in der aktuellen Situation nicht gebraucht werden, nicht unnötigerweise gereinigt werden. Zudem können die Ressourcen aufgrund der Priorisierung effizient eingesetzt werden, wodurch zum Beispiel eine Sicherheit einer automatisierten Fahrfunktion verbessert werden kann.

## Patentansprüche

1. Fahrzeug, insbesondere ein Kraftfahrzeug, umfassend ein System (100) zum Reinigen von Sensoren (10) eines Fahrzeugs (1), umfassend:
wenigstens eine Reinigungsvorrichtung (110), die eingerichtet ist, um eine Vielzahl von Sensoren (10) eines Fahrzeugs (1) zu reinigen;
und
eine Steuervorrichtung (120), die eingerichtet ist, um die wenigstens eine Reinigungsvorrichtung (110) zu steuern,
wobei die Steuervorrichtung (120) weiter eingerichtet ist, um basierend auf wenigstens einem Situationsparameter mehrere Sensoren aus der Vielzahl von Sensoren (10) auszuwählen, die gereinigt werden sollen, und um zu bestimmen, in welcher Reihenfolge die ausgewählten mehreren Sensoren gereinigt werden sollen,
**dadurch gekennzeichnet, dass** das Fahrzeug ein Fahrassistenzsystem (200) für ein automatisiertes Fahren weiter umfasst, welches eingerichtet ist, eine Fahrstrategie zu bestimmen und ein selbständiges Lenken und/oder Bremsen und/oder Beschleunigen des Fahrzeugs (1) basierend auf der Fahrstrategie zu bewirken, wobei das Fahrassistenzsystem (200) wenigstens einige der Vielzahl von Sensoren (10) verwendet, und
dass die Steuervorrichtung (120) weiter eingerichtet ist, um die Auswahl der mehreren Sensoren aus der Vielzahl von Sensoren (10) und die Bestimmung der Reihenfolge der Reinigung der ausgewählten mehreren Sensoren basierend auf Prioritäten der mehreren Sensoren für die bestimmte Fahrstrategie durchzuführen.

2. Das Fahrzeug nach Anspruch 1, wobei die Steuervorrichtung (120) weiter eingerichtet ist, um die Auswahl der mehreren Sensoren aus der Vielzahl von Sensoren (10) und die Reihenfolge der Reinigung der ausgewählten mehreren Sensoren während eines Betriebs des Fahrzeugs (1) dynamisch zu aktualisieren.

3. Das Fahrzeug nach einem der Ansprüche 1 oder 2, wobei der wenigstens eine Situationsparameter aus der Gruppe ausgewählt ist, die aus einem Fahrzustand, einem Fahrzeugzustand, einem Verscmutzungsgrad der Vielzahl von Sensoren (10) und einer Umgebungssituation des Fahrzeug (1) besteht.

4. Das Fahrzeug nach Anspruch 3, wobei:
der Fahrzustand aus der Gruppe ausgewählt ist, die aus einer Position des Fahrzeugs (1), einer Geschwindigkeit des Fahrzeugs (1), einer Verkehrssituation und einer Fahrtroute besteht; und/oder
der Fahrzeugzustand aus der Gruppe ausgewählt ist, die aus einem Reinigungsmittelvorrat, einer Verfügbarkeit der wenigstens einen Reinigungsvorrichtung und einem Energieverbrauch des Fahrzeugs (1) besteht; und/oder
die Umgebungssituation des Fahrzeugs (1) aus der Gruppe ausgewählt ist, die aus einer Wetterbedingung und einer Außentemperatur besteht.

5. Verfahren (300) zum Reinigen von Sensoren des Fahrzeugs nach Anspruch 1, umfassend:
Bestimmen einer Fahrstrategie für ein automatisiertes Fahren des Fahrzeugs, wobei das Fahrzeug basierend auf der bestimmten Fahrstrategie selbständig lenken und/oder bremsen und/oder beschleunigen soll;
Auswählen (310) einer Vielzahl von Sensoren, die gereinigt werden sollen, basierend auf wenigstens einem Situationsparameter;
Bestimmen (320), in welcher Reihenfolge die ausgewählten mehreren Sensoren gereinigt werden sollen; und
Reinigen (330) der mehreren Sensoren in der bestimmten Reihenfolge;
wobei die Auswahl der mehreren Sensoren aus der Vielzahl von Sensoren (10) und die Bestimmung der Reihenfolge der Reinigung der ausgewählten mehreren Sensoren basierend auf Prioritäten der mehreren Sensoren für die bestimmte Fahrstrategie durchgeführt wird.

6. Speichermedium, umfassend ein Software-Programm, das eingerichtet ist, um auf einem oder mehreren Prozessoren ausgeführt zu werden, und um dadurch das Verfahren (300) gemäß Anspruch 5 auszuführen.

## Claims

1. Vehicle, in particular a motor vehicle, comprising a system (100) for cleaning sensors (10) of a vehicle (1), comprising
at least one cleaning apparatus (110) which is configured to clean a multiplicity of sensors (10) of a vehicle (1); and
a control apparatus (120) which is configured to control the at least one cleaning apparatus (110),
wherein the control apparatus (120) is also configured to select a plurality of sensors from the multiplicity of sensors (10), which are intended to be cleaned, on the basis of at least one situation parameter and to determine the order in which the selected plurality of sensors are intended to be cleaned,
**characterized in that** the vehicle also comprises a driving assistance system (200) for automated driving, which driving assistance system is configured to determine a driving strategy and to automatically steer and/or brake and/or accelerate the vehicle (1) on the basis of the driving strategy, wherein the driving assistance system (200) uses at least some of the multiplicity of sensors (10), and
**in that** the control apparatus (120) is also configured to select the plurality of sensors from the multiplicity of sensors (10) and to determine the order in which the selected plurality of sensors are cleaned on the basis of priorities of the plurality of sensors for the determined driving strategy.

2. Vehicle according to Claim 1, wherein the control apparatus (120) is also configured to dynamically update the selection of the plurality of sensors from the multiplicity of sensors (10) and the order in which the selected plurality of sensors are cleaned during operation of the vehicle (1).

3. Vehicle according to either of Claims 1 and 2, wherein the at least one situation parameter is selected from the group consisting of a driving state, a vehicle state, a degree of soiling of the multiplicity of sensors (10) and an environmental situation of the vehicle (1).

4. Vehicle according to Claim 3, wherein:
the driving state is selected from the group consisting of a position of the vehicle (1), a speed of the vehicle (1), a traffic situation and a route; and/or
the vehicle state is selected from the group consisting of a cleaning agent supply, an availability of the at least one cleaning apparatus and an energy consumption of the vehicle (1); and/or
the environmental situation of the vehicle (1) is selected from the group consisting of a weather condition and an outside temperature.

5. Method (300) for cleaning sensors of the vehicle according to Claim 1, comprising:
determining a driving strategy for automated driving of the vehicle, wherein the vehicle is intended to automatically steer and/or brake and/or accelerate on the basis of the determined driving strategy;
selecting (310) a multiplicity of sensors, which are intended to be cleaned, on the basis of at least one situation parameter;
determining (320) the order in which the selected plurality of sensors are intended to be cleaned; and
cleaning (330) the plurality of sensors in the determined order;
wherein the plurality of sensors are selected from the multiplicity of sensors (10) and the order in which the selected plurality of sensors are cleaned is determined on the basis of priorities of the plurality of sensors for the determined driving strategy.

6. Storage medium comprising a software program which is configured to be executed on one or more processors and to thereby carry out the method (300) according to Claim 5.

## Revendications

1. Véhicule, en particulier véhicule automobile, comprenant un système (100) permettant de nettoyer des capteurs (10) d'un véhicule (1), comprenant
au moins un dispositif de nettoyage (110) qui est conçu pour nettoyer une pluralité de capteurs (10) d'un véhicule (1) ;
et
un dispositif de commande (120) qui est conçu pour commander ledit au moins un dispositif de nettoyage (110),
dans lequel le dispositif de commande (120) est en outre conçu pour sélectionner sur la base d'au moins un paramètre de situation plusieurs capteurs parmi la pluralité de capteurs (10) à nettoyer et pour déterminer dans quel ordre les plusieurs capteurs sélectionnés sont à nettoyer,
**caractérisé en ce que** le véhicule comprend en outre un système d'assistance au conducteur (200) pour une conduite automatisée, qui est conçu pour déterminer une stratégie de conduite et pour provoquer un braquage et/ou un freinage et/ou une accélération automatiques du véhicule (1) sur la base de la stratégie de conduite, dans lequel le système d'assistance au conducteur (200) utilise au moins certains de la pluralité de capteurs (10), et
**en ce que** le dispositif de commande (120) est en outre conçu pour effectuer la sélection des plusieurs capteurs parmi la pluralité de capteurs (10) et la détermination de l'ordre du nettoyage des plusieurs capteurs sélectionnés sur la base de priorités des plusieurs capteurs pour la stratégie de conduite déterminée.

2. Véhicule selon la revendication 1, dans lequel le dispositif de commande (120) est en outre conçu pour mettre à jour de façon dynamique la sélection des plusieurs capteurs parmi la pluralité de capteurs (10) et l'ordre du nettoyage des plusieurs capteurs sélectionnés pendant un fonctionnement du véhicule (1).

3. Véhicule selon l'une quelconque des revendications 1 ou 2, dans lequel ledit au moins un paramètre de situation est sélectionné dans le groupe qui est composé d'un état de conduite, d'un état de véhicule, d'un degré de saleté de la pluralité de capteurs (10) et d'une situation d'environnement du véhicule (1).

4. Véhicule selon la revendication 3, dans lequel :
l'état de conduite est sélectionné dans le groupe qui est composé d'une position du véhicule (1), d'une vitesse du véhicule (1), d'une situation de trafic et d'un itinéraire ; et/ou
l'état de véhicule est sélectionné dans le groupe qui est composé d'une réserve de produit de nettoyage, d'une disponibilité dudit au moins un dispositif de nettoyage et d'une consommation d'énergie du véhicule (1) ; et/ou
la situation d'environnement du véhicule (1) est sélectionnée dans le groupe qui est composé d'une condition météorologique et d'une température extérieure.

5. Procédé (300) permettant de nettoyer des capteurs du véhicule selon la revendication 1, comprenant les étapes consistant à :
déterminer une stratégie de conduite pour une conduite automatisée du véhicule, dans lequel le véhicule doit braquer et/ou freiner et/ou accélérer de manière automatique sur la base de la stratégie de conduite déterminée ;
sélectionner (310) une pluralité de capteurs qui sont à nettoyer sur la base d'au moins un paramètre de situation ;
déterminer (320) dans quel ordre les plusieurs capteurs sélectionnés sont à nettoyer ; et
nettoyer (330) les plusieurs capteurs dans l'ordre déterminé ;
dans lequel la sélection des plusieurs capteurs parmi la pluralité de capteurs (10) et la détermination de l'ordre du nettoyage des plusieurs capteurs sélectionnés sont effectuées sur la base de priorités des plusieurs capteurs pour la stratégie de conduite déterminée.

6. Support de stockage comprenant un programme logiciel qui est conçu pour être exécuté sur un ou plusieurs processeurs et pour exécuter de ce fait le procédé (300) selon la revendication 5.
